# NOUVEAU FASCICULE DE BREVET EUROPEEN

(11) **EP 0 556 140 B2**
(45) Date de publication et mention de la décision concernant l'opposition: **14.10.2009**
(45) Mention de la délivrance du brevet: 01.05.1996
(21) Numéro de dépôt: 93420068.4
(22) Date de dépôt: 12.02.1993
(51) Int. Cl.: H02G 3/04

(54) **Gaine tubulaire d'isolation phonique pour câbles électriques et procédé de fabrication**
Röhrenförmige schalldichte Umhüllung für elektrische Kabel und Herstellungsverfahren
Sound-proofing tubular sheath for electric cable and method of manufacturing

(30) Priorité: 12.02.1992 FR 9201793
(43) Date de publication de la demande: 18.08.1993
(73) Titulaire: SOFANOU S.A., 25340 Clerval (FR)
(72) Inventeur: Streit, Bernard, F-25340 Clerval (FR)
(74) Mandataire: Moinas, Michel

(56) Documents cités:
- EP-A2- 0 152 696
- DE-A1- 4 006 597
- FR-A- 2 407 414
- GB-A- 1 534 279
- US-A- 4 593 442

## Description

La présente invention est relative à des gaines tubulaires de protection pour câbles électriques, et plus particulièrement à des gaines annelées en matière plastique utilisées dans l'installation de câblages électriques à l'intérieur d'automobiles.

Les tubes annelés, c'est-à-dire ceux dont la forme ressemble à une succession d'anneaux reliés les uns aux autres, sont usuellement réalisés en matière plastique, tel que le polypropylène extrudé. Ces tubes permettent la réalisation de réseaux de gaines de protection complexes pour des faisceaux de fils ou câbles électriques au sein d'un véhicule, tel qu'automobile et camion, et notamment dans le compartiment moteur. En effet, compte tenu du faible espace disponible, ces gaines ou tuyaux doivent pouvoir suivre de très près les parois non rectilignes et contourner les différents organes rencontrés. Avec de telles gaines annelées, on peut justement réaliser des courbes dont le rayon de courbure est inférieur à trois fois leur diamètre sans que celles-ci ne se déforment vers l'intérieur ou même se cassent.

L'évolution actuelle dans la technique automobile, notamment dans le domaine des accessoires électriques tels que haut-parleurs haute-fidélité, essuie-glace de lunette arrière etc..., ainsi que du contrôle électronique permanent de nombreux paramètres résultant en des commandes automatiques, fait que de plus en plus de câbles électriques transitent dans différents éléments de carrosserie : portes, plafonniers, pour arriver entre autres dans le tableau de bord. Par ailleurs, un effort particulier est actuellement effectué pour améliorer l'insonorisation de l'habitacle, et ce par une recherche et élimination systématique de toutes les sources de bruit potentielles. Or, il a été constaté que la vibration des faisceaux de câbles à l'intérieur des gaines, ou des gaines contre les éléments de paroi pouvait engendrer des nuisances auditives.

On connaît des gaines plastiques complétées de couches co-extrudées d'isolation thermique ou de renfort mécanique. Toutefois, l'application directe de ces techniques de co-extrusion aux mousses alvéolaires anti-bruit serait beaucoup trop compliquée pour être économiquement rentable.

Il est par ailleurs également connu d'enfermer une gaine plastique de protection de câbles à l'intérieur d'un tube fendu en matériau souple que l'on fixe à intervalles réguliers au moyen de bandes adhésives. En alternative, le document japonais JP-57 085 874 divulgue une bande adhésive complétée de matière fibreuse et directement utilisée pour serrer des câbles entre eux. Comme on peut aisément le comprendre, l'utilisation de ces produits lors de l'installation de réseaux câblés s'avère fastidieuse et n'apporte qu'une protection phonique limitée.

Le but de la présente invention est une gaine tubulaire, de préférence annelée, apportant comme auparavant une protection mécanique et thermique, mais en plus une isolation phonique efficace, et dont la structure est telle que son procédé de fabrication soit relativement simple. Notamment cette structure doit permettre une possibilité de travail en reprise pour diminuer d'autant le coût final du produit. Il est par ailleurs important que la conception de la gaine permette une double isolation phonique : c'est-à-dire autant entre le câble et la gaine qu'entre la gaine et l'élément de paroi auquel elle est fixée. Enfin, l'utilisation et la mise en place de telles gaines annelées à isolation phonique doivent rester tout aussi simples et ne nécessiter aucun outillage spécial comme auparavant.

Ces buts sont atteints grâce à une gaine tubulaire en plastique souple utilisée pour la protection de câblages électriques du fait qu'elle est enrobée dans une bande en matériau d'isolant phonique collée et rabattue longitudinalement. Cet enrobage peut alors être avantageusement réalisé, à la demande, par une opération de reprise sur des gaines réalisées de manière standard, et ce avec un outillage relativement simple.

On connait, du document DE-A-4 006 597, un dispositif permettant l'insertion d'un câble à l'intérieur d'une gaine. Ce dispositif comprend un tube adjacent ou coaxial au câble et dont l'espace interne est mis sous pression avec un liquide ou de l'air comprimé de telle sorte à raidir ce tube suffisamment pour pouvoir être inséré avec le câble de force dans la gaine.

Toutefois, si de l'air comprimé ou de l'eau sous pression peuvent être considérés, dans une certaine mesure, comme un matériau d'isolation phonique, il n'en reste pas moins qu'une enveloppe raidie et durcie provoque et transmet sans autre toutes sortes de vibrations. De plus, même sous pression, rien n'empêche le câble et la paroi interne de venir contre la paroi externe du tube, et la protection phonique disparaît immédiatement.

On connait par ailleurs, du document EP-A-0 152 696, un dispositif permettant de réaliser une étanchéité dans un espace compris entre deux éléments longitudinaux coaxiaux, notamment au niveau d'une épissure d'un câble électrique et de sa gaine localement ouverte. Ce dispositif comprend une enveloppe enroulée transversalement autour de l'élément central puis gonflée par injection d'un liquide dans un produit expansible.

Parmi les nombreux matériaux imperméables ou ignifuges expansibles sont certes cités les mousses polyuréthane, de polyester, mais aussi des matériaux susceptibles de se durcir tels qu'une résine époxy, qui transmettent alors le son. De plus, il est suggéré l'usage d'une enveloppe et d'un contenant bien plus difficile à manipuler qu'une bande ; ainsi qu'un enrobage transversal particulièrement long et fastidieux à réaliser sur une gaine de longueur importante.

Selon un mode de réalisation avantageux, une gaine plastique tubulaire fendue longitudinalement est enrobée dans une bande en matériau d'isolant phonique dont les parties latérales ont été insérées à l'intérieur de ladite gaine au travers de la fente réalisant ainsi une isolation phonique à la fois contre sa surface externe et sa surface interne. Avantageusement alors, la largeur de la bande est sensiblement égale à la somme des périmètres extérieur et intérieur de la gaine plastique.

La bande peut être constituée en de nombreux matériaux isolants phoniques tels que mousse en polyéthylène expansé, mais il s'est avéré particulièrement avantageux d'utiliser des bandes de feutre, c'est-à-dire un matériau obtenu en agglutinant des poils ou des fils naturels ou artificiels. Un matériau particulièrement apprécié est une bande de feutrine acrylique.

Lorsque l'on réalise une gaine à double capitonnage par insertion des bords de la bande dans la fente de la gaine, il s'est avéré, après de nombreux essais en atelier, qu'il était suffisant que la bande en matériau d'isolant phonique soit collée sur la surface externe de la gaine plastique selon seulement 2, 3 ou 4 lignes de colle parallèles longitudinales sensiblement équidistantes.

Outre ses qualités anti-bruit, la gaine à simple isolation phonique selon l'invention est particulièrement avantageuse en ce que son procédé de fabrication consiste à :
- amener à plat une bande en matériau d'isolation phonique et à déposer une couche de colle sur sa largeur,
- amener et appliquer par dessus au centre une gaine tubulaire plastique,
- rabattre un premier côté de la bande contre la gaine plastique,
- rabattre l'autre côté de la bande contre la gaine plastique (10) et par dessus le bord du premier côté.

Alors, un dispositif pour la mise en oeuvre du procédé de fabrication peut comprendre :
- des moyens pour amener à plat une bande en matériau d'isolation phonique à partir d'un tambour d'alimentation et une station de dépôt de colle sur la largeur de la bande,
- des moyens pour amener et appliquer une gaine tubulaire plastique à partir d'un tambour d'alimentation par dessus au centre de la bande,
- une premier dispositif rabattant un premier côté de la bande contre la gaine plastique,
- suivi d'un second dispositif rabattant l'autre côté de la bande contre la gaine plastique et par dessus le bord du premier côté.

On connait certes, du document GB-A-1 534 279, un procédé de réalisation d'une gaine de protection mécanique directement extrudée autour d'un ou plusieurs câbles isolés à protéger. Afin d'éviter une malfaçon de cette gaine, il est prévu la réalisation préliminaire d'une enveloppe papier sous jacente de mise en forme tubulaire, de diamètre nettement plus large que le câble, et par dessus laquelle la gaine est co-extrudée. Ce document décrit donc un procédé et un dispositif d'extrusion complexe que la demande de brevet se propose d'éviter.

Notamment, pour la bonne réalisation de ce procédé, c'est la bande de papier qui est amenée par en dessous contre un tube de base installé à demeure à l'horizontale ; ce qui est à l'inverse du procédé selon l'invention, dans lequel c'est le tube qui est amené par dessus et appliqué de manière contrôlée au centre de la bande de matériau d'isolation phonique, préalablement mise à plat à l'horizontale.

Avantageusement, le procédé de fabrication de la gaine à double isolation phonique selon l'invention consiste à :
- amener à plat une bande en matériau d'isolation phonique et déposer en son milieu une première ligne de colle,
- amener et appliquer par dessus une gaine tubulaire plastique fendue, la fente étant orientée vers le haut,
- déposer une deuxième ligne de colle sur un premier côté de la gaine puis rabattre la bande contre la gaine plastique,
- écarter la fente et insérer la partie relevée de la bande sous une légère tension à l'intérieur de la gaine plastique,
- simultanément ou successivement répéter l'opération précédente pour la partie latérale de la bande située de l'autre côté de la gaine plastique.

Alors, un dispositif pour la mise en oeuvre du procédé de fabrication peut comprendre :
- des moyens pour amener à plat une bande en matériau d'isolation phonique à partir d'un tambour d'alimentation et une première buse de dépôt d'une première ligne de colle au milieu de la bande,
- des moyens pour amener et appliquer une gaine tubulaire plastique fendue à partir d'un tambour d'alimentation par dessus la bande, la fente étant orientée vers le haut,
- une seconde buse déposant une seconde ligne de colle sur un premier côté de la gaine plastique et un premier dispositif rabattant la bande contre le côté de la gaine plastique,
- un doigt d'ouverture écartant la fente supérieure suivi d'une première roulette verticale insérant la partie latérale de la bande sous légère tension à l'intérieur de la gaine,
- une troisième buse déposant une troisième ligne de colle sur le second côté de la gaine plastique suivie d'un second dispositif rabattant l'autre côté de la bande contre la gaine plastique, suivi d'une seconde roulette verticale insérant l'autre partie latérale de la bande sous légère tension à l'intérieur de la gaine.

Le dispositif de rabattement de la bande en matériau d'isolation phonique peut comprendre une suite de cales d'angles progressifs et/ou un guide continu et/ou un mécanisme à galets.

Avantageusement, la gaine plastique et la bande de matériau d'isolation phonique sont principalement tirés au travers du dispositif par des moyens d'entraînement agissant en aval sur la gaine enrobée, notamment un dispositif à bandes sans fin caoutchoutées.

L'invention sera mieux comprise à l'étude d'un mode de réalisation pris à titre d'exemple nullement limitatif et décrit par les figures suivantes :
- la figure 1 est une vue schématique en coupe transversale d'une gaine selon un premier mode de réalisation de l'invention,
- la figure 2 est une vue en perspective schématique d'un procédé de fabrication de la gaine de la figure 1,
- la figure 3 est une vue schématique en coupe transversale d'une gaine selon un second mode de réalisation de l'invention,
- la figure 4 est une vue en perspective schématique d'un procédé de fabrication de la gaine de la figure 3.

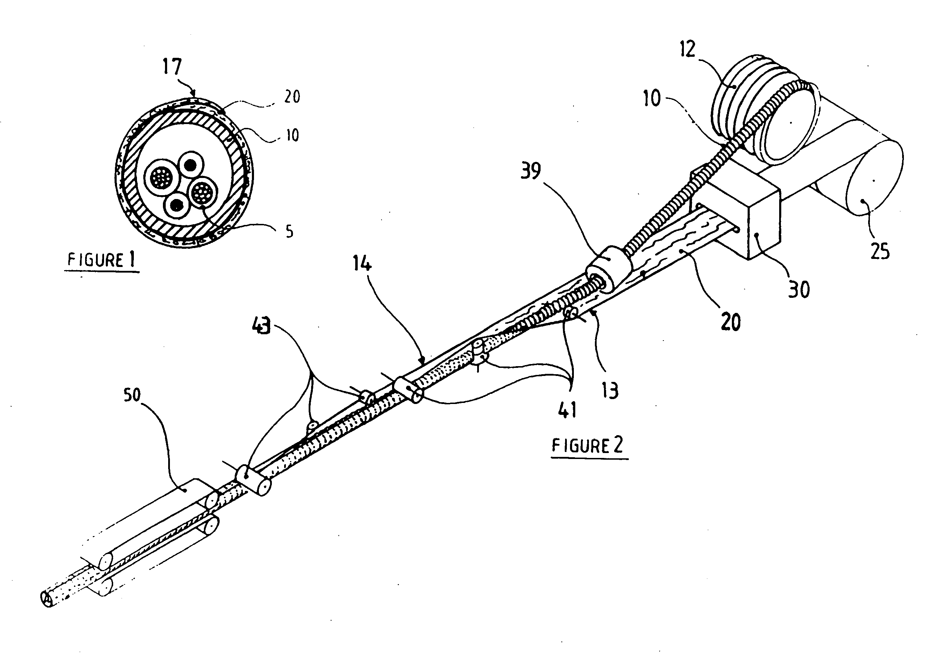

Selon l'invention, une gaine de protection phonique pour câbles électriques est réalisée par reprise à partir d'une gaine tubulaire annelée en plastique réalisée selon des procédés connus, puis stockée sur des tambours 12. Un tel tambour est initialement installé à l'entrée d'alimentation du dispositif de la figure 2. Un second tambour 25 chargé d'une bande de feutrine 20, obtenu dans le commerce, est également installé à l'entrée du dispositif, parallèlement au premier. La bande de feutrine 20 est d'abord évidée à plat puis passe dans une station 30 d'encollage sur toute la largeur de la face orientée vers le haut. Des moyens symbolisés par le guide 39 permettent d'amener la gaine plastique 10 et de l'appliquer fermement contre la face encollée.

Immédiatement après, un dispositif à galets schématiquement illustré sous la référence 41 redresse la partie latérale droite 13 de la bande de feutrine 20 à la verticale puis la retourne par dessus la partie supérieure de la gaine. En alternative, le dispositif de redressement de la bande contre la gaine peut être constitué d'une suite de cales d'angles progressifs tels que 45o, 67.5o, 90o etc..., ou d'un guide tubulaire de rayon diminuant longitudinalement.

A la suite, un second dispositif à galets schématiquement illustré sous la référence 43 redresse l'autre partie latérale gauche 14 de la bande de feutrine 20 à la verticale puis la retourne également par dessus la partie supérieure de la gaine et par dessus le bord de la première partie latérale 13. Toutefois, on peut également envisager une bande de feutrine 20 dont la largeur soit au plus égale au périmètre de la gaine, évitant ainsi le chevauchement créant une surépaisseur.

La gaine ainsi complétée passe dans un dispositif d'entraînement à bandes sans fin caoutchoutées 50 qui assure ainsi, par traction, l'effort principal nécessaire au déplacement de la gaine 10 et de la bande 20 au travers du dispositif. A l'évidence, ce dispositif d'entraînement pourrait également comprendre une pluralité de galets caoutchoutés dont le profil entourerait 'celui de la gaine. Des moyens complémentaires d'entraînement peuvent être répartis le long de cette ligne de fabrication : par exemple, des galets d'entraînement motorisés peuvent compléter les dispositifs de rabattement 41, 43.

Tel qu'illustré sur la figure 1, le produit obtenu comprend ainsi une gaine tubulaire annelée plastique 10 assurant une protection mécanique, cette gaine étant enrobée à l'extérieur par une bande de feutrine 20 dont les bords se chevauchent éventuellement en 17.

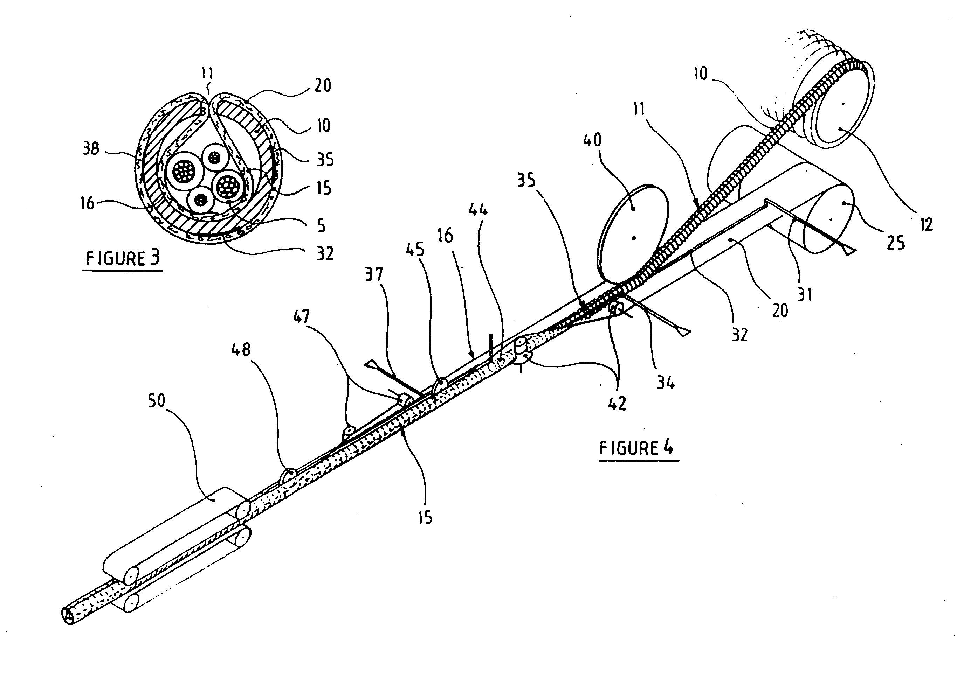

Un second mode de réalisation de l'invention est illustré sur la figure 4 dans laquelle des parties similaires portent des références identiques. Dans ce mode de réalisation, une première buse 31 dépose une première ligne médiane longitudinale de colle 32. Des moyens symbolisés par le disque 40 permettent d'amener la gaine plastique 10 avec sa fente 11 orientée vers le haut et de l'appliquer fermement contre la première ligne de colle.

Immédiatement après, une seconde buse 34 dépose une seconde ligne de colle 35 sur l'un des côtés de la gaine, par exemple le droit tel qu'illustré sur la figure 4, et un dispositif à galets schématiquement illustré sous la référence 42 redresse la partie latérale droite de la bande de feutrine 20 à la verticale appliquant ainsi déjà cette bande contre le quart inférieur de la gaine.

A la suite, un doigt d'ouverture 44 passant par la fente écarte celle-ci, ce qui permet à une roulette d'introduction 45 d'insérer le reste de la partie latérale droite de la bande à l'intérieur de la gaine sous une légère tension ce qui, par la même occasion, achève d'appliquer la bande contre le quart supérieur droit de la gaine.

Simultanément ou à la suite, une troisième buse 37 dépose une seconde ligne latérale de colle sur l'autre côté de la gaine, en l'occurrence le côté gauche. Puis, un second dispositif à galets représenté schématiquement sous la référence 47, ou autre dispositif de même fonction, redresse la partie latérale gauche de la bande 20 contre la gaine amenant cette partie momentanément à la verticale vers une seconde roulette 48 qui l'introduit à l'intérieur de la gaine. Par ce mouvement, cette partie gauche a également été appliquée sous légère tension contre la surface latérale extérieure gauche, le surplus ayant été introduit à l'intérieur.

Tel qu'illustré sur la figure 3, le produit obtenu comprend alors une gaine tubulaire annelée plastique 10 assurant une protection mécanique, cette gaine étant enrobée à l'extérieur par une bande de feutrine 20 qui se poursuit à l'intérieur par deux bandes latérales 15 et 16. Comme on peut l'observer, cette bande de feutrine est collée uniquement sur la surface extérieure de la gaine par quelques lignes 32, 35, 38. En effet, il s'est avéré que, lors de l'insertion des câbles électriques 5 dans la gaine au travers de la fente 11, ces câbles tombent forcément entre les bandes internes de feutrine 15 et 16 qu'elles appliquent contre la paroi interne.

De préférence, la bande de matériau d'isolation phonique 20 est réalisée en feutrine à partir de fils acryliques présentant une bonne résistance au feu. En alternative, on aurait également pu envisager une bande de mousse polyéthylène expansé telle que celle commercialisée sous la dénomination "NOPA FOAM" par la Société PSG.

Comme on a pu le constater à la lecture de cet exposé, le procédé de réalisation de cette gaine particulière anti-bruit peut être effectué en reprise, c'est-à-dire en dehors des machines d'extrusion de tube plastique initial, ce qui en facilite la mise en oeuvre ainsi que la gestion de la production. La gaine obtenue est particulièrement insonorisée dans la mesure où les vibrations sont atténuées aussi bien au niveau du contact entre le câble et la gaine qu'entre la gaine et la paroi.

## Revendications

1. Gaine tubulaire (10) en plastique souple utilisée pour la protection mécanique et/ou thermique de câblage électrique, cette gaine tubulaire (10) comportant une fente longitudinale (11) et étant enrobée dans une bande en matériau d'isolant phonique (20) collée et rabattue longitudinalement, **caractérisée en ce que** les parties latérales (15,16) de la bande en matériau d'isolant phonique (20) ont été insérées à l'intérieur de la gaine au travers de la fente (11), créant ainsi une isolation phonique à la fois contre sa surface externe et sa surface interne.

2. Gaine selon la revendication 1, **caractérisée en ce que** la largeur de la bande (20) est sensiblement égale à la somme des périmètres extérieur et intérieur de la gaine plastique (10).

3. Gaine selon la revendication 1 ou 2, **caractérisée en ce que** la bande en matériau d'isolation phonique (20) est réalisée en feutre.

4. Gaine selon l'une des revendications 1 à 3, **caractérisée en ce que** la bande en matériau d'isolation phonique est collée sur la face externe de la gaine plastique (10) selon 2, 3 ou 4 lignes (32,35,38) de colle parallèles longitudinales sensiblement équidistantes.

5. Procédé de fabrication d'une gaine d'isolation phonique selon l'une des revendications 1 à 4, **caractérisé en ce qu'**il consiste à :
- amener à plat une bande en matériau d'isolation phonique (20) et déposer en son milieu une première ligne de colle (32),
- amener et appliquer par dessus au centre une gaine tubulaire plastique (10) fendue, la fente (11) étant orientée vers le haut,
- déposer une deuxième ligne de colle (35) sur un premier côté de la gaine (20) puis rabattre le côté correspondant de la bande contre la gaine plastique (10),
- écarter la fente (11) et insérer la partie latérale (15) de la bande (20) sous une légère tension à l'intérieur de la gaine plastique,
- simultanément ou successivement répéter l'opération précédente pour la partie latérale (16) de la bande située de l'autre côté de la gaine plastique (10).

6. Dispositif pour la mise en oeuvre du procédé selon la revendication 5, **caractérisé en ce qu'**il comprend
- des moyens pour amener à plat une bande en matériau d'isolation phonique (20) à partir d'un tambour d'alimentation (25) et une première buse (31) de dépôt d'une première ligne de colle (32) au milieu de la bande (20),
- des moyens (40) pour amener et appliquer une gaine tubulaire plastique (10) fendue à partir d'un tambour d'alimentation (12) par dessus la bande (20), la fente (11) étant orientée vers le haut,
- une seconde buse (34) déposant une seconde ligne de colle (35) sur un premier côté de la gaine plastique (20) et un premier dispositif (42) rabattant la bande (20) contre le côté de la gaine plastique (10),
- un doigt d'ouverture (44) écartant la fente supérieure (11) suivi d'une première roulette verticale (45) insérant la partie latérale (15) de la bande (20) sous légère tension à l'intérieur de la gaine,
- une troisième buse (37) déposant une troisième ligne de colle (38) sur le second côté de la gaine plastique (20) suivie d'un second dispositif (47) rabattant l'autre côté de la bande contre la gaine plastique (10), suivi d'une seconde roulette verticale (48) insérant l'autre partie latérale (16) de la bande (20) sous légère tension à l'intérieur de la gaine.

7. Dispositif selon la revendication 6, **caractérisé en ce que** la gaine plastique (10) et la bande de matériau d'isolation phonique (20) sont principalement tirées au travers du dispositif par des moyens d'entraînement (50) agissant en aval sur la gaine enrobée.

8. Dispositif selon la revendication 7, **caractérisé en ce que** le dispositif d'entraînement est un dispositif à bandes sans fin caoutchoutées.

## Claims

1. Tubular sheath (10) made from flexible plastic used for the mechanical and/or thermal protection of electric cabling, said tubular sheat (10) having a longitudinal slit (11) and being wrapped in a strip of sound-insulating material (20) glued and folded over longitudinally **characterised in that** the lateral parts (15,16) of the strip of sound-insulating material (20) have been inserted inside the sheath through the slit (11), thus creating sound insulation against both its external surface and internal surface.

2. Sheath according to Claim 1, **characterised in that** the width of the strip (20) is substantially equal to the sum of the external and internal perimeters of the plastic sheath (10).

3. Sheath according to Claim 1 or 2, **characterised in that** the strip of sound-insulating material (20) is produced from felt.

4. Sheath according to one of Claims 1 to 3, **characterised in that** the strip of sound-insulating material is bonded to the external face of the plastic sheath (10) in 2, 3 or 4 substantially equidistant longitudinal parallel lines (32, 35, 38) of glue.

5. Method of manufacturing a sound-insulating sheath according to one of Claims I to 4, **characterised in that** it consists of :
- introducing a flat strip of sound-insulating material (20) and depositing a first line of glue (32) at its middle,
- introducing and applying to the top, at the centre, a split tubular plastic sheath (10), the slit (11) being oriented towards the top,
- depositing a second line of glue (35) on a first side of the sheath (20) and then folding over the corresponding side of the strip against the plastic sheath (10),
- opening up the slit (11) and inserting the lateral part (15) of the strip (20) under slight tension inside the plastic sheath,
- simultaneously or successively repeating the preceding operation for the lateral part (16) of the strip situated on the other side of the plastic sheath (10).

6. Device for implementing the method according to Claim 5, **characterised in that** it comprises :
- means for introducing, in a flat condition, a strip of sound-insulating material (20) from a feed drum (25) and a first nozzle (31) for depositing a first line of glue (32) in the middle of the strip (20),
- means (40) for introducing and applying a split tubular plastic sheath (10) from a feed drum (12) to the top of the strip (20), the slit (11) being oriented towards the top,
- a second nozzle (34) depositing a second line of glue (35) on a fist side of the plastic sheath (20) and a first device (42) folding over the strip (20) against the side of the plastic sheath (10),
- an opening finger (44) opening up the top slit (11) followed by a first vertical wheel (45) inserting the lateral part (15) of the strip (20) under slight tension inside the sheath,
- a third nozzle (37) depositing a third line of glue (38) on the second side of the plastic sheath (20) followed by a second device (47) folding over the other side of the strip against the plastic sheath (10), followed by a second vertical wheel (48) inserting the other lateral part (16) of the strip (20) under slight tension inside the sheath.

7. Device according to Claim 6, **characterised in that** the plastic sheath (10) and the strip of sound-insulating material (20) are principally drawn through the device by drawing means (50) acting downstream on the wrapped sheath.

8. Device according to Claim 7, **characterised in that** the drawing device is a rubberised endless belt device.

## Patentansprüche

1. Röhrenförmige Umhüllung (10) aus nachgiebigem Kunststoff zum Einsatz für den mechanischen und/oder thermischen Schutz elektrischer Verkabelungen, welche röhrenförmige Umhüllung (10) einen längsgerichteten Schlitz (11) aufweist und in ein Band (20) aus schalldichtem Material, das geklebt und in Längsrichtung umgeschlagen ist, eingehüllt ist, **darduch gekennzeichnet, daß** die seitlichen Abschnitte (15, 16) des Bandes (20) aus schalldichtem Material über den Schlitz (11) ins Innere der Umhüllung eingeführt sind unter Schaffung einer gleichzeitigen Schallisolierung an der äußeren Oberfläche und an der inneren Oberfläche der Umhüllung.

2. Umhüllung nach Anspruch 1, **dadurch gekennzeichnet, daß** die Breite des Bandes (20) etwa gleich der Summe von Außeb- und Innenumfang der Umhüllung (10) aus Kunststoff ist.

3. Umhüllung nach Anspruch 1 oder 2, **dadurch gekennzeichnet, daß** das aus schalldichtem Material bestehende Band ein Filz ist.

4. Umhüllung nach einem der vorhergehenden Ansprüche 1-3, **dadurch gekennzeichnet, daß** das Band (20) aus schalldichtem Material auf die Außenfläche der Umhüllung (10) entlang von zwei, drei oder vier parallelen längsgerichteten und äquidistanten Klebelinien (32, 35, 38) geklebt ist.

5. Verfahren zur Herstellung einer schalldichten Umhüllung nach einem der Ansprüche 1-4, **dadurch gekennzeichnet, daß** es umfaßt
- ebenes Zuführen eines Bandes (20) aus schalldichtem Material und Anbrigen einer ersten Kleberlinie (32) in seiner Mitte,
- Zuführen und Aufbringen einer röhrenförmigen, geschlitzten Umhüllung (10) aus Kunststoff im Zentrum, wobei der Schlitz (11) nach oben orientiert ist,
- Anbrigen einer zweiten Kleberlinie (35) auf einer ersten Seite der Umhüllung (10) und anschließendes Umschlagen der entsprechtenden Seite des Bandes (20) gegen die Umhüllung (10) aus Kunststoff,
- Spreizen des Schlitzes (11) und Einführen des seitlichen Abschnitts (15) des Bandes (20) unter leichtem Zug nach innen in die Umhüllung (10) aus Kunststoff,
- gleichzeitiges oder nachfolgendes Wiederholen des vorausgegangenen Vorgangs für den seitlichen Abschnitt (16) des Bandes, der auf der anderen Seite der Umhüllung (10) aus Kunststoff gelegen ist.

6. Vorrichtung zur Durchführung des Verfahrens nach Anspruch 5, **dadurch gekennzeichnet, daß** sie aufweist
- Mittel zum ebenen Zuführen eines Bandes (20) aus schalldichtem Material, ausgehend von einer Versorgungswalze (25) und eine erste Düse (31) zum Aufbringen einer ersten Kleberlinie (32) in der Mitte des Bandes (20),
- Mittel (40) zum Zuführen und Aufbringen einer geschlitzten, röhrenförmigen Umhüllung (10) aus Kunststoff, ausgehend von einer Versorgungswalze (12) über dem Band (20), wobei der Schlitz (11) nach oben gerichtet ist,
- eine zweite Düse (34) zum Aufbringen einer zweiten Kleberlinie (35) auf einer ersten Seite der Umhüllung (10) aus Kunststoff und eine erste Vorrichtung (42), die das Band (20) gegen die Seite der Umhüllung (10) aus Kunststoff umschlägt,
- einem Öffnungsfinger (44) zum Spreizen des oben liegenden Spalts (11), gefolgt von einer ersten vertikalen Rolle (45) zum Einführen des seitlichen Abschnitts (15) des Bands unter leichtem Zug nach innen in die Umhüllung,
- einer dritten Düse (37) zum Aufbringen einer dritten Kleberlinie (38) auf der zweiten Seite der Umhüllung (10) gefolgt von einer zweiten Vorrichtung (47) zum Umschlagen der anderen Seite des Bands gegen die Umhüllung (10) aus Kunststoff, gefolgt von einer zweiten vertikalen Rolle (48) zum Einführen des anderen seitlichen Abschnitts (16) unter leichtem Zug nach innen in die Umhüllung.

7. Vorrichtung nach Anspruch 6, **dadurch gekennzeichnet, daß** die Umhüllung (10) aus Kunststoff und das Band (20) aus schalldichtem Material durch Antriebsmittel (50) grundsätzlich durch die Vorrichtung gezogen warden, wobei die Antriebsmittel stromabwärts auf die ummantelte Umhüllung einwirken.

8. Vorrichtung nach Anspruch 7, **dadurch gekennzeichnet, daß** die Antriebseinrichtung eine Vorrichtung mit endlosen, gummierten Bändern ist.
